# NEUE EUROPÄISCHE PATENTSCHRIFT

(11) **EP 3 743 480 B2**
(45) Veröffentlichungstag und Bekanntmachung des Hinweises auf die Entscheidung über den Einspruch: **10.12.2025**
(45) Hinweis auf die Patenterteilung: 24.11.2021
(21) Anmeldenummer: 19701200.8
(22) Anmeldetag: 18.01.2019
(51) Int. Cl.: C09J 7/40

(54) **BEDRUCKTE UND BESCHICHTETE TRENNFOLIE**
PRINTED AND COATED RELEASE FOIL
FILM DE SÉPARATION IMPRIMÉ ET MUNI D'UN REVÊTEMENT

(30) Priorität: 22.01.2018 DE 102018101331
(43) Veröffentlichungstag der Anmeldung: 02.12.2020
(73) Patentinhaber: Loparex Germany GmbH & Co. KG, 91301 Forchheim (DE)
(72) Erfinder: SAYGILI, Sahin, 91301 Forchheim (DE); SITZMANN, Stefan, 91356 Kirchehrenbach (DE); SCHMIDT, Werner, 91301 Forchheim (DE); KRÜGEL, Stefan, 91320 Ebermannstadt (DE); SEELER, Matthias, 91330 Eggolsheim (DE); DITTRICH, Gerald, 91301 Forchheim (DE)
(74) Vertreter: Kutzenberger Wolff & Partner
(86) Internationale Anmeldenummer: PCT/EP2019/051196
(87) Internationale Veröffentlichungsnummer: WO 2019/141792

(56) Entgegenhaltungen:
- DE-A1- 102009 042 008
- US-A1- 2004 137 242

## Beschreibung

Die Erfindung betrifft eine Trennfolie umfassend eine Trägerschicht, ein Druckbild und eine Releasebeschichtung, wobei das Druckbild wenigstens teilweise zwischen der Trägerschicht und der Releasebeschichtung angeordnet ist, wobei das Druckbild mindestens eine durch UV-Strahlung radikalisch ausgehärtete Farbe umfasst, und wobei die Releasebeschichtung ein durch UV-Strahlung radikalisch ausgehärtetes Polysiloxan umfasst; die Verwendung der Trennfolie als Verpackungsmittel; und ein Verfahren zur Herstellung der Trennfolie.

Trennfolien werden vielfach als abziehbare Schutzfolien für Klebebänder, Selbstklebeetiketten oder klebefähige Sanitär- und Hygieneartikel eingesetzt, um ein Verkleben dieser einseitig oder beidseitig klebenden Produkte bei der Lagerung oder Verarbeitung zu verhindern. Dazu müssen sich Trennfolien durch eine gute Trennwirkung gegen Klebstoffe wie z.B. druckempfindliche Klebstoffe oder andere klebefähige Materialien auszeichnen. Um diese Eigenschaften zu gewährleisten, weisen Trennfolien häufig eine Releasebeschichtung auf, welche z.B. auf einem Polysiloxan basieren kann.

Darüber hinaus ist es häufig wünschenswert, die Trennfolien zu bedrucken, und zwar zu informativen Zwecken oder aus ästhetischen, produktionstechnischen oder sonstigen Gründen. Beispielsweise können farbige Tast-, Steue-rungs- und/oder Druckmarken, d.h. farbige Markierungen, in bestimmten Abständen auf der Trägerseite neben oder unter der Releasebeschichtung der Trennfolie aufgedruckt sein. Diese farbigen Tast-, Steuerungs- und/oder Druckmarken ermöglichen dann bei der Herstellung oder Verpackung von Produkten, wie z. B. Sanitär- oder Hygiene-Produkten, in einer dafür vorgesehenen Vorrichtung durch optische Methoden eine genaue Platzierung der Trennfolien und der Produkte zueinander.

WO 1993/23310 betrifft einen flexiblen Behälter zum Verpacken von Produkten mit einem druckempfindlichen Klebstoff darauf, wie beispielsweise Damenbinden. Der Behälter ist aus einer Papier- oder Kunststofffolie gebildet, die auf einer Seite mit einer Schicht aus Silikon beschichtet ist, wobei die Behälterkonstruktion derart ist, dass die Silikonbeschichtung die Innenflächen des Behälters definiert. Aufgrund der Antihafteigenschaft der Silikonbeschichtung kann die übliche Schutzeinlage für den Klebstoff am verpackten Produkt entfallen.

WO 1990/007560 offenbart ein Verfahren zum Versehen mindestens einer Oberfläche eines Substrats (Trägerelementes), insbesondere eines Liners, mit mindestens einer Beschichtung mindestens eines Trennmittels (klebrige Stoffe abweisenden Mittels) derart, dass in Form eines Rasters Teilflächen mit unterschiedlichen Trennkraftwerten (Release-Kräften) gebildet werden.

WO 2005/075592 betrifft einen Trennschichtträger mit einem flächigen Substrat und einer darauf aufgebrachten Trennschicht. Der Trennschichtträger ist geeignet, Selbsthaftklebematerial mit einer Schicht Haftkleber zu hinterlegen. Er weist eine Reliefstruktur mit erhabenen Stegen auf, die in der Schicht Haftkleber im wesentlichen komplementäre Kanäle bilden, die beim Aufkleben eingesperrte Luft entweichen lassen.

WO 2007/079921 offenbart ein Verfahren zur Herstellung eines Liners zum lösbaren Abdecken von Klebeflächen, insbesondere zum wiederablösbaren Abdecken von Klebeflächen von Klebebändern oder Klebefolien, umfassend die folgenden Schritte: Bereitstellen einer Trägerschicht; Aufbringen einer oder mehrerer erhabener Strukturen auf mindestens eine Oberfläche der Trägerschicht, wobei die Struktur oder Strukturen fest mit dieser Oberfläche verbunden sind; und Bedecken der Oberfläche und der Struktur oder Strukturen, die damit verbunden sind, mit einer dehäsiven Schicht.

US 2004/137242 offenbart kationisch strahlungshärtbare Tinten, welche keine Geisterbilder zeigen, wenn sie mit lösungsmittelfreien und strahlungshärtbaren Silikon-Trennbeschichtungen beschichtet werden. Wenn aggressive Klebstoffe auf Lösungsmittelbasis auf die auf ein Substrat aufgebrachte Tinte gegossen werden und nach dem Trocknen abgelöst werden, werden keine Geisterbilder beobachtet. Das Ergebnis ist die Fähigkeit, Grafiken auf ein Substrat zu drucken und das Substrat mit einer Silikon-Trennbeschichtung und einer Beschichtung mit einer Klebstoffschicht zu bedecken, die eine akzeptable Klarheit nach dem Entfernen der Trennbeschichtung beibehält.

EP 2 576 383 B1 offenbart einen Behälter mit Vorkehrungen, die eine Manipulation oder frühere Versuche beim Öffnen des Behälters anzeigen. Der Behälter enthält eine Abziehlasche zum Öffnen des Behälters, um Zugang zum Inneren des Behälters und dessen Inhalt zu erhalten. Der Behälter enthält ferner Einrichtungen für die Zuglasche, die zumindest teilweise von einem Behältersubstrat getrennt sein müssen, um Zugang zu der Abziehlasche zu erhalten. Das Trennen der Zuglaschenvorrichtungen gibt Aufschluss über Manipulationsversuche oder vorherige Öffnungsversuche.

DE 19 820 274 offenbart eine Kunststofffolie mit einer Antihaftbeschichtung, insbesondere Silikon, zum Herstellen einer Einschlagverpackung mit geprägten Rand- Verschluss-Streifen.

DE 20 2014 105 973 U1 offenbart eine Folie mit mindestens einer Schicht enthaltend mindestens ein Homo- oder Copolymer, wobei über der besagten Schicht zumindest bereichsweise eine Hitzeschutzlackschicht aufgebracht ist und wobei über der Hitzeschutzlackschicht zumindest bereichsweise eine Beschichtung mit mindestens einem Polysiloxan aufgebracht ist.

Es ist aus dem Stand der Technik bekannt, in einem ersten Arbeitsgang eine Trägerfolie mit z.B. einer lösemittelhaltigen, z.B. auf Nitrocellulose basierenden Farbe zu bedrucken und anschließend, in einem zweiten Arbeitsgang, eine Releasebeschichtung auf die getrocknete Farbe aufzubringen.

Die Herstellung solcher Trennfolien ist jedoch infolge der separaten Arbeitsschritte für Bedruckung und anschließende Aufbringung der Releasebeschichtung vergleichsweise aufwendig und es besteht ein Bedarf an verbesserten Trennfolien, welche durch verbesserte Verfahren hergestellt werden können.

Es ist eine Aufgabe der Erfindung, verbesserte Trennfolien sowie ein Verfahren für deren Herstellung bereitzustellen.

Diese Aufgabe wird durch den Gegenstand der Patentansprüche gelöst.

Ein erster Aspekt der Erfindung betrifft eine Trennfolie umfassend eine Trägerschicht, ein Druckbild und eine Releasebeschichtung, wobei das Druckbild wenigstens teilweise zwischen der Trägerschicht und der Releasebeschichtung angeordnet ist, so dass das Druckbild wenigstens teilflächig von der Releasebeschichtung bedeckt wird, wobei das Druckbild mindestens eine durch UV-Strahlung radikalisch ausgehärtete Farbe umfasst, und wobei die Releasebeschichtung ein durch UV-Strahlung radikalisch ausgehärtetes Polysiloxan umfasst und ein Flächengewicht von ≤ 5g/m2 aufweist.

Es wurde überraschend gefunden, dass bei der Herstellung der erfindungsgemäßen Trennfolie ein Arbeitsgang (Druckschritt) eingespart und auf diese Weise die Produktionszeit erheblich verkürzt, ggf. sogar halbiert werden kann. Bedruckung, Aushärtung des Druckbilds, Aufbringung der Releasebeschichtung und Aushärten der Releasebeschichtung können innerhalb weniger Sekunden in einem gemeinsamen Arbeitsgang auf einer einzigen Vorrichtung durchgeführt werden. Auf einer vorhandenen Fertigungsanlage kann auf diese Weise der Ausstoß erheblich erhöht, ggf. sogar verdoppelt werden.

Ferner wurde überraschend gefunden, dass bei der Herstellung der erfindungsgemäßen Trennfolie eine genauere Steuerung möglich ist, da Bedruckung und Aufbringen der Releasebeschichtung konzertiert in einem gemeinsamen Arbeitsgang erfolgen können. Unerwünschte Effekte, welche beim herkömmlichen zweiten Arbeitsgang für die Releasebeschichtung durch die Folienrolle auftreten, können auf diese Weise unterdrückt werden.

Darüber hinaus wurde überraschend gefunden, dass bei der Herstellung der erfindungsgemäßen Trennfolie die Haftung des Druckbilds und der Releasebeschichtung verbessert wird, insbesondere wenn lösemittelfreie Druckfarben eingesetzt werden. Andernfalls kann es nämlich dazu kommen, dass die Releasebeschichtung eine zu geringe Haftung auf einer noch mit Restlösemittel versetzten Farbschicht aufbaut, wenn diese z.B. auf Nitrocellulose basiert und deshalb ein Lösemittel erfordert.

Die erfindungsgemäße Folie ist eine Trennfolie, d.h. sie ist dazu geeignet und bestimmt, als abziehbare Schutzfolie für selbstklebende Produkte, wie z.B. Klebebänder, Selbstklebeetiketten oder klebefähige Sanitär- und Hygieneartikel eingesetzt zu werden (*release liner*). Die erfindungsgemäße Trennfolie kann synonym auch als "Schutzfolie" bezeichnet werden.

Die erfindungsgemäße Trennfolie eignet sich insbesondere für die Anwendung in Verpackungen von Sanitär- oder Hygieneartikeln, vorzugsweise ausgewählt aus der Gruppe umfassend Damenbinden und Slip-Einlagen (Damenbindenverpackungen, *siliconized single wrap film*).

Bevorzugt weist die erfindungsgemäße Trennfolie eine Gesamtschichtdicke von mindestens 5 µm, bevorzugter mindestens 10 µm auf. Bevorzugt weist die erfindungsgemäße Trennfolie eine Gesamtschichtdicke im Bereich von 5 µm bis 50 µm auf, bevorzugter im Bereich von 10 µm bis 45 µm, noch bevorzugter im Bereich von 15 µm bis 40 µm. Geeignete Methoden zur Bestimmung der Schichtdicke sind einem Fachmann bekannt. Erfindungsgemäß bevorzugt erfolgt die Ermittlung der Schichtdicke durch Mikrotomschnitt.

Die erfindungsgemäße Folie umfasst eine Trägerschicht. Als Trägerschicht im Sinne der Erfindung eignet sich grundsätzlich jede Schicht aus einem bedruckbaren Material. Vorzugsweise basiert die Trägerschicht auf einem Polymer oder einer Mischung mehrerer Polymere, welche bevorzugt thermoplastisch sind, besonders bevorzugt ausgewählt aus der Gruppe bestehend aus Polyolefinen, Polyamiden, Polyestern und Copolymeren und/oder Mischungen aus wenigstens zwei Monomeren der genannten Polymere.

Besonders bevorzugt sind Polyolefine, Mischungen mehrerer Polyolefine, oder Mischungen mehrerer Polyolefine mit einem oder mehreren anderen Polymeren. Besonders bevorzugt basiert die Trägerschicht auf Polyethylen, Polypropylen oder einer Mischung von Polyethylen und Polypropylen.

Vorzugsweise können zur Herstellung der Trägerschicht thermoplastische Polyolefine, thermoplastische Olefin-Homo- oder Copolymere von α,β-ungesättigten Olefinen mit 2 bis 10 Kohlenstoffatomen wie z.B. Polyethylene (PE, insbesondere LDPE oder HDPE), Polypropylene (PP), Polybutylene (PB), Polyisobutylene (PI), Copolymere und/oder Mischungen aus wenigstens zwei der genannten Polymere eingesetzt werden.

Mit "LDPE" wird Polyethylen niedriger Dichte bezeichnet, welches eine Dichte im Bereich von 0,86-0,93 g/cm³ aufweist und sich durch einen hohen Verzweigungsgrad der Moleküle auszeichnet.

Mit "HDPE" wird Polyethylen hoher Dichte bezeichnet, welches nur eine geringe Verzweigung der Molekülkette aufweist, wobei die Dichte im Bereich zwischen 0,94 und 0,97 g/cm³ liegen kann. Bevorzugte Polyolefine zur Herstellung der Trägerschicht sind Ethylen-Homo- oder Copolymere und Propylen-Homo- oder Copolymere.

Soweit zur Herstellung der Trägerschicht Polyamide eingesetzt werden, sind thermoplastische aliphatische, teilaromatische oder aromatische Polyamid Homo-oder Copolymere geeignet. Solche Polyamide sind Polyamide aus Diaminen wie aliphatischen Diaminen mit 2-10 Kohlenstoffatomen, insbesondere Hexamethylendiamin, oder aromatischen Diaminen mit 6-10 Kohlenstoffatomen, insbesondere p-Phenylendiamin und Dicarbonsäuren wie aliphatischen oder aromatischen Dicarbonsäuren mit 6-14 Kohlenstoffatomen wie z.B. Adipinsäure, Terephthalsäure oder Isoterephthalsäure. Weiterhin können die Polyamide aus Lactamen mit 4-10 Kohlenstoffatomen wie z.B. ε-Caprolactam hergestellt worden sein. Besonders geeignete Polyamide zur Herstellung der Schicht (a) sind z.B. PA 6, PA 12, PA 66, PA 6I, PA 6T und/oder Mischungen aus wenigstens zwei der genannten Polyamide.

Als Polyester zur Herstellung der Trägerschicht können thermoplastische, aliphatische, teilaromatische oder aromatische Polyester Homo-oder Copolymere eingesetzt werden. Solche Polyester leiten sich von Polyolen wie z.B. Ethylenglycol oder 1,4-Butandiol und Dicarbonsäuren oder Dicarbonsäure-Derivaten wie Adipinsäure, und/oder Terephthalsäure ab. Erfindungsgemäß können zur Herstellung der Trägerschicht(en) als Polyester auch Polycarbonate (PC) verwendet werden. Bevorzugt eignen sich Polybutylenadipat (PBA), Polyethylenterephthalat (PET), Polybutylenterephthalat (PBT) oder die entsprechenden Copolymere.

Die Trägerschicht kann grundsätzlich eingefärbt und dazu ggf. mit Pigmenten ausgerüstet oder transparent bezogen auf Licht sein. Bevorzugt ist die Trägerschicht eingefärbt.

Bevorzugt weist die erfindungsgemäße Trägerschicht eine Schichtdicke von mindestens 5 µm, bevorzugter mindestens 10 µm auf. Bevorzugt weist die erfindungsgemäße Trägerschicht eine Schichtdicke im Bereich von 5 µm bis 50 µm auf, bevorzugter im Bereich von 10 µm bis 45 µm, noch bevorzugter im Bereich von 15 µm bis 40 µm. Geeignete Methoden zur Bestimmung der Schichtdicke sind einem Fachmann bekannt. Erfindungsgemäß bevorzugt erfolgt die Ermittlung der Schichtdicke durch Mikrotomschnitt.

Zur Verbesserung der Bedruckbarkeit kann wenigstens eine der beiden Oberflächen der Trägerschicht teil- oder vollflächig vorbehandelt sein, insbesondere durch Einsatz von Maßnahmen, welche die Oberflächenspannung erhöhen, insbesondere Plasma- und Corona-Verfahren. Die Vorbehandlung erfolgt dann bevorzugt zumindest in den Flächenbereichen der Oberfläche, welche später mit dem Druckbild bedruckt ist. Bevorzugt weist die Trägerschicht auf der dem Druckbild zugewandten Vorderseite eine Oberflächenspannung von mindestens 30 mN/m auf, bevorzugter mindestens 35 mN/m und noch bevorzugter mindestens 40 mN/m.

Die erfindungsgemäße Folie umfasst ein Druckbild, welches mindestens eine durch UV-Strahlung radikajisch ausgehärtete Farbe umfasst. Bevorzugt umfasst das Druckbild mehrere unterschiedliche, durch UV-Strahlung ausgehärtete Farben. Geeignete Farben, mit denen Trägerfolien bedruckt werden können und welche durch UV-Strahlung radikalisch ausgehärtet werden können, sind einem Fachmann bekannt und kommerziell erhältlich (z.B. UV Produktgruppe, Siegwerk oder FLEXOCURE GEMINI^{®} Produktgruppe, FlintGroup).

Die durch UV-Strahlung ausgehärtete Farbe ist radikalisch ausgehärtet. Die durch UV-Strahlung radikalisch ausgehärtete Farbe basiert vorzugsweise auf einer durch UV-Strahlung aushärtbaren Acrylatzusammensetzung (z.B. FLEXOCURE GEMINI^{®}; YELLOW, FlintGroup, FLEXOCURE GEMINI^{®};BLACK FlintGroup oder UV 259, Sieg- werk.

Einem Fachmann stehen analytische Methoden zur Verfügung, mit denen auch noch nachträglich anhand der fertigen Trennfolie untersucht werden kann, ob eine Aushärtung durch eine radikalische Reaktion erfolgte. Beispielsweise kann dies durch spektroskopische Methoden wie NMR- oder IR-Spektroskopie erfolgen.

In einer bevorzugten Ausführungsform umfasst die durch UV-Strahlung ausgehärtete Farbe einen fluoreszierenden Farbstoff oder einen lumineszenzfähigen Farbstoff.

Die bedruckte Fläche des Druckbilds ist erfindungsgemäß nicht besonders eingeschränkt. Bevorzugt ist nicht die gesamte Oberfläche der Trägerschicht mit dem Druckbild bedruckt. Die bedruckte Fläche des Druckbilds liegt bevorzugt im Bereich von 1 % bis 99 % der Oberfläche der Trägerschicht, bevorzugter im Bereich von 5 % bis 95 %, noch bevorzugter im Bereich von 10 % bis 90%.

Die erfindungsgemäße Folie umfasst eine Releasebeschichtung, welche ein durch UV-Strahlung radikalisch ausgehärtetes Polysiloxan umfasst. Geeignete Beschichtungszusammensetzungen, mit denen bedruckte Trägerfolien beschichtet werden können und welche durch UV-Strahlung radikalisch ausgehärtet werden können, sind einem Fachmann ebenfalls bekannt und kommerziell ebenfalls erhältlich (z.B. TEGO^{®} RC, Evonik oder SILFORCE^{®} UV, Momentive).

Unter dem Begriff "Polysiloxan" werden im Sinne der Erfindung Verbindungen verstanden, deren Polymerketten abwechselnd aus Silicium- und Sauerstoffatomen aufgebautsind. Ein Polysiloxan basiert auf n wiederkehrenden Siloxan-
Einheiten (-[Si(R₂)-O]-)ₙ, welche jeweils unabhängig voneinander mit zwei organischen Resten R disubstituiert sind, wobei R vorzugsweise jeweils für R¹ oder OR¹ steht und R¹ jeweils für einen Alkyl-Rest oder einen Aryl-Rest steht.

Vorzugsweise basiert das erfindungsgemäße ausgehärtete Polysiloxan auf einer wiederkehrenden Dialkylsilo-xan-Einheit oder auf einer wiederkehrenden Alkylaryl-Siloxan-Einheit. Je nachdem, wie viele Si-O-Bindungen eine einzelne Siloxan-Einheit, jeweils bezogen auf ein vierwertiges Siliciumatom, aufweist, lassen sich diese Einheiten in endständige monofunktionelle Siloxane (M) mit einer Si-O-Bindung, difunktionelle Siloxane (D) mit zwei Si-O-Bindungen, trifunktionelle Siloxane (T) mit drei Si-O-Bindungen und tetrafunktionelle Siloxane (Q) mit vier Si-O-Bindungen unterscheiden.

Vorzugsweise weist das erfindungsgemäß eingesetzte Polysiloxan eine vernetzte ring- oder kettenförmige, besonders bevorzugt eine vernetzte kettenförmige Struktur auf, welche durch (D)-, (T)-, und/oder (Q)-Einheiten zu einem zwei- oder dreidimensionalen Netzwerk verknüpft ist.

Das durch UV-Strahlung ausgehärtete Polysiloxan ist radikalisch ausgehärtet. Das durch UV-Strahlung radikalisch ausgehärtete Polysiloxan basiert vorzugsweise auf einer durch UV-Strahlung aushärtbaren Acrylatzusammensetzung (z.B. TEGO^{®} RC 702, Evonik).

Die Releasebeschichtung der erfindungsgemäßen Trennfolie basiert auf wenigstens einem ausgehärteten, d.h. vernetzten Polysiloxan ausgewählt aus der Gruppe bestehend aus radikalisch vernetzten Polysiloxanen. Bevorzugt basiert die Releasebeschichtung der erfindungsgemäßen Trennfolie auf wenigstens einem ausgehärteten Polysiloxan ausgewählt aus der Gruppe bestehend aus Polydialkylsiloxanen, vorzugsweise Polydimethylsiloxanen, und Polyalkylarylsiloxanen, vorzugsweise Polymethylphenylsiloxanen, die jeweils ausgehärtet sind.

Das Flächengewicht der Releasebeschichtung der erfindungsgemäßen Trennfolie beträgt vorzugsweise ≤ 2 g/m², besonders bevorzugt liegt es im Bereich von 0,1 g/m² bis 1,5 g/m²

Vorzugsweise weist die erfindungsgemäße Trennfolie eine einseitige Silikonbeschichtung, d.h. nur als eine ihrer Oberflächenschichten auf. Alternativ kann die erfindungsgemäße Trennfolie eine beidseitige Silikonbeschichtung aufweisen.

Die Fläche der Releasebeschichtung ist erfindungsgemäß nicht besonders eingeschränkt. In einer bevorzugten Ausführungsform ist nicht die gesamte Oberfläche der Trägerschicht mit der Releasebeschichtung bedeckt (Rapport). In einer anderen bevorzugten Ausführungsform ist die gesamte Oberfläche der Trägerschicht mit der Releasebeschich-tung bedeckt. Die Fläche der Releasebeschichtung liegt bevorzugt im Bereich von 1 % bis 100 % der Oberfläche der Trägerschicht, bevorzugter im Bereich von 50 % bis 100 %, noch bevorzugter im Bereich von 75 % bis 100 %.

Das Druckbild kann ein einzelnes zusammenhängendes Gebilde sein oder mehrere voneinander getrennte Gebilde umfassen. Vorzugsweise werden solche mehrere, voneinander getrennte Gebilde in einem gemeinsamen Ar-beitsschritt aufgedruckt, wobei unterschiedliche Farben vorzugsweise zeitlich nacheinander aufgedruckt werden, bei-spielsweise durch Flexodruck.

Bei der erfindungsgemäßen Folie ist das Druckbild wenigstens teilweise zwischen der Trägerschicht und der Releasebeschichtung angeordnet, so dass das Druckbild wenigstens teilflächig von der Releasebeschichtung bedeckt wird. Bevorzugt ist das Druckbild vollständig zwischen der Trägerschicht und der Releasebeschichtung angeordnet, so dass das Druckbild vollflächig von der Releasebeschichtung bedeckt wird. Bevorzugt ist die Fläche der Releasebe-schichtung größer als die bedruckte Fläche des Druckbilds, so dass auch unbedruckte Bereiche der Oberfläche der Trägerschicht von den Releasebeschichtung bedeckt sind.

Bevorzugt grenzt das Druckbild sowohl direkt an die Trägerschicht als auch direkt an die Releasebeschichtung an, d.h. berührt sowohl unmittelbar die Trägerschicht als auch unmittelbar die Releasebeschichtung.

In einer bevorzugten Ausführungsform umfasst die erfindungsgemäße Trennfolie auf der dem Druckbild ab-gewandten Rückseite der Trägerschicht mindestens eine weitere Schicht, vorzugsweise wenigstens eine weitere Schicht basierend auf wenigstens einem thermoplastischen Polymer. In einer bevorzugten Ausführungsform umfasst die erfin-dungsgemäße Trennfolie auf der dem Druckbild abgewandten Rückseite der Trägerschicht mehrere weitere Schichten, vorzugsweise unabhängig voneinander basierend auf jeweils wenigstens einem thermoplastischen Polymer.

In einer bevorzugten Ausführungsform ist eine weitere Schicht eine Barriereschicht oder sind mehrere weitere Schichten Barriereschichten, vorzugsweise eine Sauerstoffbarriereschicht, Wasserdampfbarriereschicht oder Ölbarri-ereschicht.

Zur Herstellung von Barriereschichten eignet sich vorzugsweise wenigstens ein thermoplastisches Polymer, besonders bevorzugt wenigstens ein thermoplastisches Polymer ausgewählt aus der Gruppe umfassend Polyamide, Ethylen-Vinylalkohol-Copolymere (EVOH), Polyvinylalkohole (PVOH) und eine Mischung aus wenigstens zwei der genannten Polymere.

Die zur Herstellung von Barriereschichten eingesetzten Polyamide (PA) sind vorzugsweise dieselben vorste-hend näher erläuterten Polyamide, welche auch zur Herstellung der Trägerschicht der erfindungsgemäßen Trennfolie eingesetzt werden können. Die zur Herstellung der Barriereschicht eingesetzten Polyvinylalkohole werden durch voll-ständige oder unvollständige Hydrolyse von entsprechenden Polyvinylacetaten (PVA) gewonnen und umfassen somit sowohl teilverseifte Polyvinylacetate, die einen Verseifungsgrad von 50 bis 98 mol-% aufweisen, als auch vollverseifte Polyvinylacetate mit einem Verseifungsgrad ≥ 98 %. Die zur Herstellung der Barriereschicht eingesetzten Ethylen-Vinylalkohol-Copolymere (EVOH) werden durch vollständige oder unvollständige Hydrolyse von entsprechenden ethylenhaltigen Polyvinylacetaten (EVAc) gewonnen und umfassen vor allem vollverseifte ethylenhaltige Polyvinylacetate mit einem Verseifungsgrad ≥ 98 %.

Die erfindungsgemäße Trägerschicht liegt bevorzugt als Bestandteil einer Mehrschichtfolie vor, bevorzugt als Bestandteil eines mehrschichtigen Blas- oder Cast-Folie oder als Bestandteil eines mehrschichtigen Folienverbunds vor, bevorzugt in Form einer Schlauchfolie. Besonders bevorzugt ist die erfindungsgemäße Trägerschicht Bestandteil einer mehrschichtigen Blasfolie.

Bevorzugt ist die erfindungsgemäße Trägerschicht Bestandteil einer Mehrschichtfolie, welche insgesamt mindestens 2, 3, 4 oder 5 Schichten umfasst, von denen die Trägerschicht eine Schicht ist. Die einzelnen Schichten der Mehrschichtfolie können dann erfindungsgemäß unterschiedlichen Zwecken dienen. Beispielsweise kann die Siegelbarkeit der Mehrschichtfolie durch die Zusammensetzung und Schichtdicke der außenliegenden Schicht beeinflusst werden. Auch ist eine Funktionalisierung und/oder Mattierung einzelner Schichten Möglich. Eine Stabilisierung kann bevorzugt über die Mittelschicht der Mehrschichtfolie erfolgen.

Eine oder mehrere Barriereschichten können erfindungsgemäß bevorzugt verhindern, dass migrationsfähige Bestandteile des verpackten Guts, z.B. eines Haftklebers auf einer Damenbinde, durch die Mehrschichtfolie hindurch migrieren und auf diese Weise z.B. die Umverpackung erreichen.

In einer bevorzugten Ausführungsform ist die erfindungsgemäße Trägerschicht Bestandteil einer mindestens monoaxial gereckten, mindestens zu 50 Gew.-% aus Polyolefinen bestehenden, mehrschichtigen Kunststofffolie mit Trennwirkung und einer Gesamtdicke < 18 µm, vorzugsweise < 12 µm, die auf mindestens einer Oberfläche eine mindestens partielle Prägung aufweist. Bevorzugte Ausführungsformen dieser mehrschichtigen Kunststofffolie sind in WO 2015/139844 beschrieben, auf deren gesamten Offenbarungsgehalt hiermit auch hinsichtlich bevorzugter Ausführungsformen der Erfindung Bezug genommen wird.

In einer weiteren bevorzugten Ausführungsform ist die erfindungsgemäße Trägerschicht Bestandteil einer flexiblen Kunststofffolie, welche mindestens monoaxial orientiert und gegebenenfalls geprägt ist und eine um mindestens 30% unterschiedliche Weiterreißfestigkeit in Maschinenrichtung zu der Weiterreißfestigkeit quer zur Maschinenrichtung aufweist. Bevorzugte Ausführungsformen dieser mehrschichtigen Kunststofffolie sind in WO 2015/139845 beschrieben, auf deren gesamten Offenbarungsgehalt hiermit auch hinsichtlich bevorzugter Ausführungsformen der Erfindung Bezug genommen wird.

In einer anderen bevorzugten Ausführungsform ist die erfindungsgemäße Trägerschicht Bestandteil einer mindestens monoaxial in Maschinenrichtung zu mindestens 1:2 gereckten, mehrschichtigen, zumindest zu 50 Gew.% aus Polyolefinen bestehenden Kunststofffolie mit einer Gesamtdicke ≤ 18 µm, vorzugsweise ≤ 12 µm, die eine Dehnung von bis zu höchstens 1 % bei einer Zugkraft von wenigstens 3N pro 25 mm Breite gemäß DIN EN ISO 527-3 aufweist. Bevorzugte Ausführungsformen dieser mehrschichtigen Kunststofffolie sind in WO 2015/139843 beschrieben, auf deren gesamten Offenbarungsgehalt hiermit auch hinsichtlich bevorzugter Ausführungsformen der Erfindung Bezug genommen wird.

In einer weiteren bevorzugten Ausführungsform ist die erfindungsgemäße Trägerschicht Bestandteil einer mehrschichtigen Polyolefinfolie umfassend eine Schichtfolge aus
a) einer siegelbaren Schicht (a) basierend auf einer Polyethylen-Komponente mit einer Dichte im Bereich von 0,910 bis 0,940 g/cm³ und einem Schmelzpunkt im Bereich von 110 °C bis 130 °C,
b) einer Schicht (b) basierend auf einer Polymermischung aus 51 - 85 Gew.-% wenigstens eines Polyethylens mit einer Dichte von 0,910 bis 0,940 g/cm³ und 15 - 49 Gew.-%, jeweils bezogen auf das Gesamtgewicht der Polymermischung, wenigstens eines Propylen-Homo- oder - Copolymeren,
c) einer siegelbaren Schicht (c) basierend auf einer Polyethylen-Komponente mit einer Dichte im Bereich von 0,910 bis 0,940 g/cm³ und einem Schmelzpunkt im Bereich von 110 °C bis 130 °C,
wobei der Schmelzpunkt der Schicht (a) bzw. der Schicht (c) um mindestens 5°C tiefer liegt als der Schmelzpunkt der Schicht (b), wobei die Weiterreißfestigkeit in Maschinenrichtung [MD] < 5 N beträgt und die Weiterreißfestigkeit quer zur Maschinenrichtung [CD] um mindestens das Vierfache höher ist als in [MD], jeweils gemessen nach DIN 53356, und die Zugfestigkeit ungefähr gleich groß in Maschinenrichtung [MD] wie quer zur Maschinenrichtung [CD] ist und > 15 N, gemessen nach DIN ISO 527-3, beträgt. Bevorzugte Ausführungsformen dieser mehrschichtigen Kunststofffolie sind in WO 2017/016660 beschrieben, auf deren gesamten Offenbarungsgehalt hiermit auch hinsichtlich bevorzugter Ausführungsformen der Erfindung Bezug genommen wird.

In einer anderen bevorzugten Ausführungsform umfasst die erfindungsgemäße Trennfolie neben der Trägerschicht und der Releasebeschichtung keine weiteren Schichten, d.h. die erfindungsgemäße Trennfolie besteht dann aus der Trägerschicht und der Releasebeschichtung (sowie dem Druckbild und ggf. vorhandenen weiteren Druckbildern). Die erfindungsgemäße Trägerschicht liegt dann bevorzugt als einschichtige Blas- oder Cast-Folie vor.

Die Releasebeschichtung, die Trägerschicht sowie die ggf. vorhandene weitere Schicht bzw. weiteren Schichten der erfindungsgemäßen Trennfolie können, wenn notwendig, jeweils unabhängig voneinander, mit Zusatzstoffen ausgerüstet bzw. dotiert sein, vorzugsweise ausgewählt aus der Gruppe bestehend aus Antiblockmitteln, Antistatika, Antifogmitteln, antimikrobiellen Wirkstoffen, Farbstoffen, Farbpigmenten, Stabilisierungsmitteln, vorzugsweise Hitze-Stabilisatoren, Prozess-Stabilisatoren, Prozesshilfsmittel, Flammschutzmittel, Nukleierungsmittel, Kristallisationsmittel, vorzugsweise Kristallkeimbildnern, Gleitmitteln, optischen Aufhellern, Flexibilisierungsmitteln, Siegelmitteln, Weichmachern, Abstandshaltern, Füllstoffen, Peel-Additiven, Wachsen, Benetzungsmitteln, oberflächenaktive Verbindungen, vorzugsweise Tensiden, und Dispergiermitteln. Dabei muss die Trennwirkung der Silikonbeschichtung, d.h. des Polysiloxans erhalten bleiben.

Die Releasebeschichtung, die Trägerschicht sowie die ggf. vorhandene weitere Schicht bzw. weiteren Schichten der erfindungsgemäßen Trennfolie können, wenn notwendig, jeweils unabhängig voneinander wenigstens 0,01-30 Gew.- %, vorzugsweise wenigstens 0,1-20 Gew.-%, jeweils bezogen auf das Gesamtgewicht einer einzelnen Schicht, unabhängig voneinander wenigstens einen der vorstehend genannten Zusatzstoffe enthalten.

In einer bevorzugten Ausführungsform umfasst die erfindungsgemäße Trennfolie neben dem Druckbild auf der Trägerschicht, und zwar auf ihrer dem Druckbild abgewandten Rückseite, ein weiteres Druckbild.

Bevorzugt unterschieden sich das Druckbild und das weitere Druckbild voneinander. Beispielsweise ist es bevorzugt, dass eines der beiden Druckbilder eine Bedienungsanleitung für das verpackte Gut umfasst und das andere der beiden Druckbilder eine Anleitung zur Entsorgung des verpackten Gutes nach dessen bestimmungsgemäßer Verwendung darstellt.

Ist die Trägerschicht transparent, so können das Druckbild und das weitere Druckbild bei Draufsicht auf die Releasebeschichtung und das darunterliegende Druckbild beide betrachtet werden, d.h. das weitere Druckbild scheint durch die transparente Trägerschicht hindurch.

In einer bevorzugten Ausführungsform der erfindungsgemäßen Trennfolie ist das Druckbild und/oder das weitere Druckbild eine Tast-, Steuerungs- und/oder Druckmarke, welche bevorzugt im Randbereich der Trennfolie angeordnet ist.

In einer besonders bevorzugten Ausführungsform der erfindungsgemäßen Trennfolie umfasst das Druckbild und/oder das weitere Druckbild eine zusätzliche Tast-, Steuerungs- und/oder Druckmarke, welche bevorzugt im Randbereich der Trennfolie angeordnet ist.

Erfindungsgemäß bevorzugt umfasst der "Randbereich der Trennfolie" die dem Rand zugewandten 20%, bevorzugter 10% der Gesamterstreckung der Trennfolie orthogonal zum Rand an der jeweiligen Stelle. Weist die Trennfolie beispielsweise orthogonal zum Rand eine Gesamterstreckung (Breite) von 15 cm auf, so umfasst der Randbereich der Trennfolie an dieser Stelle bevorzugt die dem Rand zugewandten 3 cm, bevorzugter 1,5 cm.

In einer besonders bevorzugten Ausführungsform der erfindungsgemäßen Trennfolie weist diese auf ihren beiden Außenseiten zumindest teilflächig eine Releasebeschichtung auf, wobei die Zusammensetzung der Releasebeschichtung bevorzugt jeweils identisch ist. Ist die Trägerschicht die einzige Schicht, so weisen dann bevorzugt beide Außenseiten der Trägerschicht zumindest teilflächig eine Releasebeschichtung auf. Ist die Trägerschicht Bestandteil einer Mehrschichtfolie, so weist die Trägerschicht auf der dem Druckbild zugewandten Seite zumindest teilflächig eine Releasebeschichtung auf, und die gegenüberliegende äußerste Schicht der Mehrschichtfolie, d.h. die andere Außenseite, weist ebenfalls zumindest teilflächig eine weitere Releasebeschichtung auf.

Ein weiterer Aspekt der Erfindung betrifft eine Verpackung für einen Sanitär- oder Hygieneartikel, vorzugsweise ausgewählt aus der Gruppe umfassend Damenbinden und Slip-Einlagen, wobei die Verpackung die vorstehend beschriebene erfindungsgemäße Trennfolie umfasst.

Bevorzugt ist die erfindungsgemäße Verpackung als Einschlagverpackung ausgebildet. Bevorzugt besteht die gesamte Verpackung aus der Trennfolie und dem Verpackungsgut (Hygieneartikel).

Die Trägerschicht weist ein Druckbild auf, welches bevorzugt durch den davorliegenden Hygieneartikel vollständig oder zumindest teilweise verdeckt ist. Der Hygieneartikel weist vorzugsweise auf dessen Rückseite einen Haftklebstoff auf, über welchen der Hygieneartikel auf der Releasebeschichtung fixiert ist. Durch manuelles Abziehen kann der Haftklebstoff von der Releasebeschichtung abgelöst werden und der Hygieneartikel aus der Verpackung entnommen werden. Die Haftkraft des Haftklebstoffs am Hygieneartikel ist dabei vorzugsweise größer als die Haftkraft an der Releasebeschichtung, so dass der Haftklebstoff bei der Entnahme aus der Verpackung auf dem Hygieneartikel verbleibt. Bevorzugt kann der Haftklebstoff anschließend weitere Funktionen erfüllen. Handelt es sich beispielsweise bei dem Hygieneartikel um eine Damenbinde, so kann diese bei bestimmungsgemäßer Anwendung über den Haftklebstoff an der Innenseite der Unterwäsche fixiert werden. Durch die Entnahme des Hygieneartikels wird das dahinterliegende Druckbild vollständig sichtbar und kann z.B. ästhetischen Zwecken dienen und/oder beispielsweise in Form von Piktogrammen und/oder Text eine Anleitung zur Entsorgung des Hygieneartikels nach dessen bestimmungsgemäßer Verwendung umfassen.

In einer bevorzugten Ausführungsform weist die Trägerschicht im Randbereich jeweils einen Streifen aus Haftklebstoff auf, über welchen die Verpackung bei Einschlagen seitlich verschlossen werden kann. Vorzugsweise ist die Verpackung wiederverschließbar. Ein Fachmann erkennt, dass zum seitlichen Verschließen alternativ auch andere Möglichkeiten eingesetzt werden können, wie z.B. Heißsiegeln, Krimpen, etc. Um eine Wiederverschließbarkeit zu gewährleisten, wird erfindungsgemäß bevorzugt ein Haftklebstoff eingesetzt.

In einer bevorzugten Ausführungsform ist der Hygieneartikel nicht zentriert zur Trägerschicht angeordnet, sondern seitlich versetzt, so dass ein Bereich des Hygieneartikels am Rand der Trägerschicht übersteht.

Zum Zwecke der Erläuterung der Funktionsweise der Einschlagverpackung wird nachfolgend der Vorgang des Wiederverschließens beschrieben. Beim erstmaligen Öffnen der Einschlagverpackung werden die entsprechenden Schritte in umgekehrter Reihenfolge durchlaufen. Zur Erläuterung der Funktionsweise der Verpackung als Einschlagverpackung lässt sich die Trennfolie gedanklich über eine erste Einschlagfalz in einen schmalen Einschlagabschnitt sowie einen mittleren Einschlagabschnitt unterteilen. Ferner lässt sich die Trennfolie über eine zweite Einschlagfalz in den mittleren Einschlagabschnitt sowie einen breiten Einschlagabschnitt unterteilen.

Beim Wiederverschließen wird in einem ersten Schritt der schmale Einschlagabschnitt entlang der ersten Einschlagfalz eingeschlagen (eingeklappt), wodurch ein ggf. rückseitig angeordnetes weiteres Druckbild auf der Vorderseite der Verpackung angeordnet und daher in der Draufsicht sichtbar wird. Das weitere Druckbild kann ästhetischen Zwecken dienen und/oder beispielsweise in Form von Piktogrammen und/oder Text eine Anleitung zur bestimmungsgemäßen Entnahme der Damenbinde aus der Verpackung umfassen. Über den bevorzugten, im Randbereich aufgetragenen Haftklebstoff bilden der rückseitige mittlere Einschlagabschnitt sowie der vorderseitige schmale Einschlagabschnitt dann eine Art verschlossenen Beutel, in dessen Öffnung die eingeschlagene Damenbinde hereinreicht.

Beim Wiederverschließen werden in einem zweiten Schritt der mittlere Einschlagabschnitt sowie der darüber geklappte schmale Einschlagabschnitt entlang der zweiten Einschlagfalz erneut eingeschlagen (eingeklappt), wodurch ein anderer Abschnitt des ggf. rückseitig angeordnetes weiteres Druckbild auf der Vorderseite der Verpackung angeordnet und daher in der Draufsicht sichtbar wird. Das weitere Druckbild kann ebenfalls ästhetischen Zwecken dienen und/oder beispielsweise in Form von Piktogrammen und/oder Text eine Anleitung zur bestimmungsgemäßen Entnahme der Damenbinde aus der Verpackung umfassen. Über den bevorzugten, im Randbereich aufgetragenen Haftklebstoff bilden der rückseitige breite Einschlagabschnitt sowie der vorderseitige mittlere Einschlagabschnitt sowie der mittig angeordnete schmale Einschlagabschnitt eine Art verschlossenen Beutel, in dessen Innenraum sich der zweifach eingeschlagene Hygieneartikel befindet.

Bevorzugt wird ein überstehender Bereich der Trennfolie dabei nicht vom breiten Einschlagabschnitt verdeckt, bleibt also sichtbar und kann z.B. als Lasche zum vereinfachten Öffnen der Verpackung mit den Händen dienen. Ein Fachmann erkennt, dass es vorteilhaft sein kann, wenn auch die Rückseite der Trägerschicht bzw. im Falle einer Mehrschichtfolie die rückseitige Außenschicht der Trennfolie zumindest im Randbereich eine weitere Releasebeschichtung aufweist, damit der Haftklebstoff daran haftet und auch wieder davon ablösbar ist.

Ein weiterer Aspekt der Erfindung betrifft die Verwendung der vorstehend beschriebenen erfindungsgemäßen Trennfolie als Verpackungsmaterial für einen Sanitär- oder Hygieneartikel, vorzugsweise ausgewählt aus der Gruppe umfassend Damenbinden und Slip-Einlagen.

Ein Verfahren zur Herstellung der vorstehend beschriebenen erfindungsgemäßen Trennfolie umfasst die Schritte: (a) Bedrucken wenigstens eines Teils der Oberfläche einer Trägerschicht mit mindestens einer durch UV-Strahlung radikalisch aushärtbaren Farbe; (b) Bestrahlen der radikalisch aushärtbaren Farbe mit UV-Strahlung; (c) Aufbringen einer Beschichtungszusammensetzung, welche ein durch UV-Strahlung radikalisch aushärtbares Polysiloxan umfasst, auf wenigstens einen Teil der bedruckten Oberfläche der Trägerschicht; und (d) Bestrahlen des radikalisch aushärtbaren Polysiloxans mit UV-Strahlung.

Die Herstellung der erfindungsgemäßen Trennfolie kann nach bekannten Herstellungsverfahren wie z.B. Laminierung oder (Co)-Extrusion, vorzugsweise durch Co-Extrusion erfolgen. Dabei kann die Trägerschicht und/oder die ggf. vorhandene weitere Schicht bzw. die ggf. vorhandenen weiteren Schichten durch Extrusion, vorzugsweise durch Flachfolien-Extrusion (Cast-Extrusion) oder Blasfolien-Extrusion, insbesondere durch Flachfolien-Co-Extrusion (Cast-Co-Extrusion) oder Blasfolien-Co-Extrusion gebildet werden, wobei Blasfolien-Co-Extrusion erfindungsgemäß bevorzugt ist.

Bevorzugt kann die Trägerschicht und/oder die ggf. vorhandene weitere Schicht bzw. die ggf. vorhandenen weiteren Schichten ggf. als Mehrschichtfolie, ggf. in Form einer Schlauchfolie produziert und verarbeitet werden.

Die so erhaltene ein- bzw. bevorzugt mehrschichtige Blas- oder Cast-Folie oder der so erhaltene gesamte ggf. mehrschichtige Folienverbund in Form einer Schlauchfolie kann direkt im Anschluss ohne vorherige Lagerung oder alternativ schon bei seiner Herstellung geprägt werden. Vorzugsweise wird die ein- bzw. bevorzugt mehrschichtige Blas- oder Cast-Folie oder der ggf. mehrschichtige Folienverbund in Form einer Schlauchfolie schon bei seiner Herstellung geprägt.

Bevorzugt erfolgen Schritte (a) bis (d) zeitlich in alphabetischer Reihenfolge, wobei es möglich ist, dass Schritte (a) und (b), Schritte (b) und (c), und/oder Schritte (c) und (d) unabhängig voneinander zumindest teilweise gleichzeitig durchgeführt werden. Insbesondere ist es erfindungsgemäß bevorzugt, dass die Aushärtung der radikalisch aushärtbaren Farbe, welche durch UV-Strahlung in Schritt (b) induziert wird, noch nicht vollständig abgeschlossen sein muss, wenn bereits in Schritt (c) die Beschichtungszusammensetzung aufgebracht und anschließend in Schritt (d) mit UV-Strahlung bestrahlt wird.

Bevorzugt wird Schritt (d) nicht später als 300 Sekunden nach Schritt (b) durchgeführt, so dass Schritte (a) bis (d) praktisch in einem gemeinsamen Arbeitsgang durchgeführt werden. In bevorzugten Ausführungsformen wird Schritt (d) nicht später als 240 Sekunden, oder nicht später als 180 Sekunden, oder nicht später als 120 Sekunden, oder nicht später als 60 Sekunden, oder nicht später als 30 Sekunden, oder nicht später als 10 Sekunden nach Schritt (b) durch-geführt. In bevorzugten Ausführungsformen wird Schritt (d) nicht später als 9 Sekunden, oder nicht später als 8 Sekunden, oder nicht später als 7 Sekunden, oder nicht später als 6 Sekunden, oder nicht später als 5 Sekunden, oder nicht später als 4 Sekunden nach Schritt (b) durchgeführt. Da das erfindungsgemäße Verfahren vorzugsweise kontinuierlich durch-geführt wird, erkennt ein Fachmann, dass sich die vorstehenden Zeitangaben in diesem Fall auf konkrete Abschnitte der erfindungsgemäßen Trennfolie beziehen, wenn diese Abschnitte z.B. auf einem gemeinsamen Zentralzylinder mit mehreren hintereinandergeschalteten Farbwerken zunächst mit dem Druckbild bedruckt und bestrahlt und unmittelbar anschließend daran mit der Releasebeschichtung beschichtet und erneut bestrahlt werden. Die Zeitspanne zwischen Schritt (b) und (d) ergibt sich dann aus dem räumlichen Abstand der UV-Strahlungsquellen auf dem Umfang des gemeinsamen Zentralzylinders und der Maschinengeschwindigkeit. Das nachgeschaltete Druckwerk für die Auftragung der Beschichtungszusammensetzung kann alternativ auch auf einem eigenen zentralen Gegendruckzylinder befestigt sein.

Bevorzugt liegt die Maschinengeschwindigkeit im Bereich von 100 und 800 m/min, bevorzugt 200 m/min und 450 m/min und ist abhängig vom Typ der Trägerfolie, von der Anzahl der unterschiedlichen Drucktechniken und Druck-farben oder auch einer ggf. notwendigen genauen Steuerung von mehreren Bedruckungen bzw. Beschichtungen.

Bevorzugt werden sowohl die Farbe für das Druckbild als auch die Releasebeschichtung, z.B. eine Beschichtungszusammensetzung zur Herstellung radikalisch UV härtbarer Silikonschichten, in einem einzelnen, gemeinsamen Arbeitsgang unmittelbar nacheinander gedruckt, z.B. auf einem gemeinsamen Zentralzylinder in einem ersten Farbwerk (Druckbild) und einem zweiten Farbwerk (Releasebeschichtung). Dabei kann die Releasebeschichtung vollflächig oder teilflächig (Rapport) aufgebracht werden.

In einer bevorzugten Ausführungsform wird die Releasebeschichtung teilflächig (Rapport) gesteuert aufgebracht, wobei die Steuerung mit Hilfe einer Tast-, Steuerungs- und/oder Druckmarke oder dem Druckbild unterhalb der Releasebeschichtung erfolgen kann.

In einer bevorzugten Ausführungsform wird ein weiteres Druckbild auf der dem Druckbild abgewandten Rückseite der Trägerfolie aufgebracht, wobei die Bedruckung dieses weiteren Druckbildes bevorzugt ungesteuert erfolgt. In einer bevorzugten Ausführungsform wird die Releasebeschichtung teilflächig (Rapport) gesteuert aufgebracht, wobei die Steuerung mit Hilfe dieses weiteren Druckbildes auf der dem Druckbild abgewandten Rückseite der Trägerfolie erfolgen kann.

Tast-, Steuerungs- und/oder Druckmarken sind einem Fachmann bekannt und können unterschiedliche Funk-tionen erfüllen. Erfindungsgemäß bevorzugt kann die Tast-, Steuerungs- und/oder Druckmarke dazu dienen,
- beim Bedrucken in Schritt (a) die relative Position des Druckbilds auf der Trennfolie festzulegen;
- sofern zusätzlich vorhanden, beim Bedrucken die relative Position des weiteren Druckbilds auf der Trennfolie festzulegen;
- beim Aufbringen der Releasebeschichtung in Schritt (c) die relative Position der Releasebeschichtung auf der Trennfolie festzulegen, insbesondere wenn die Releasebeschichtung nur teilflächig aufgebracht wird; und/oder
- beim späteren Einsatz der Trennfolie z.B. als Verpackungsmaterial die relative Position des Verpackungsguts bzw. eines am Verpackungsgut angebrachten Haftklebstoffs auf der Trennfolie bzw. der Releasebeschichtung festzulegen.

Bevorzugt hat die in Schritt (b) eingesetzte UV-Strahlung im Wesentlichen dieselbe Wellenlänge wie die in Schritt (d) eingesetzte UV-Strahlung.

Druckfarben und/oder Beschichtungszusammensetzungen, welche radikalisch aushärtbar sind (z.B. auf Acrylat-Basis), haben mitunter den Vorteil, dass sie zu keiner Geruchsbelästigung führen. Dafür erfordern solche Druckfarben und/oder Beschichtungszusammensetzungen allerdings den Einsatz von Inertgasen.

Die durch UV-Strahlung aushärtbare Farbe ist radikalisch aushärtbar und das durch UV-Strahlung aushärtbare Polysiloxan ist radikalisch aushärtbar.

In einer bevorzugten Ausführungsform des Verfahrens werden die Schritte (a) bis (d) unter Schutzgasatmosphäre durchgeführt.

In bevorzugten Ausführungsformen des Verfahrens (i) enthält die durch UV-Strahlung radikalisch aushärtbare Farbe ein Lösemittel und das durch UV-Strahlung radikalisch aushärtbare Polysiloxan enthält ein Lösemittel; (ii) enthält die durch UV-Strahlung radikalisch aushärtbare Farbe ein Lösemittel und das durch UV-Strahlung radikalisch aushärtbare Polysiloxan ist lösemittelfrei; (iii) ist die durch UV-Strahlung radikalisch aushärtbare Farbe lösemittelfrei und das durch UV-Strahlung radikalisch aushärtbare Polysiloxan enthält ein Lösemittel; oder (iv) ist die durch UV-Strahlung radikalisch aushärtbare Farbe lösemittelfrei und ist das durch UV-Strahlung radikalisch aushärtbare Polysiloxan lösemittelfrei.

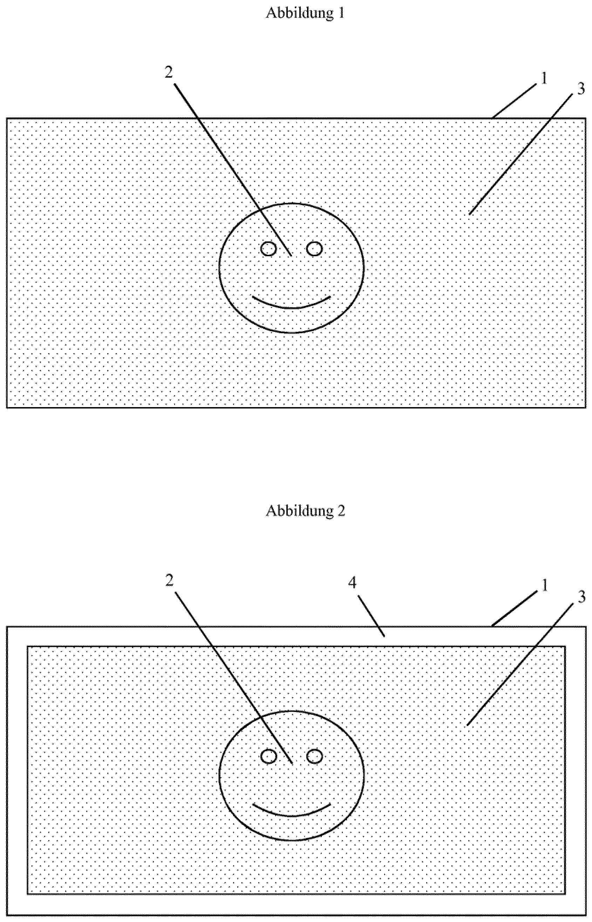

Abbildung 1 illustriert schematisch eine bevorzugte Ausführungsform der erfindungsgemäßen Trennfolie aus Trägerschicht (1), Druckbild (2) und Releasebeschichtung (3). Bei der Ausführungsform gemäß Abbildung 1 ist die Releasebeschichtung (3) vollflächig auf die Trägerschicht (1) mitsamt dem Druckbild (2) aufgebracht, so dass die Fläche der Releasebeschichtung (3) der Fläche der Trägerschicht (1) entspricht.

Abbildung 2 illustriert schematisch eine bevorzugte Variante der erfindungsgemäßen Trennfolie aus Trägerschicht (1), Druckbild (2) und Releasebeschichtung (3). Bei der Ausführungsform gemäß Abbildung 2 ist die Releasebeschichtung (3) teilflächig auf die Trägerschicht (1) mitsamt dem Druckbild (2) aufgebracht, so dass die Fläche der Releasebeschichtung (3) kleiner ist als die Fläche der Trägerschicht (1), es verbleibt ein Randbereich (4), welcher nicht mit der Releasebeschichtung (3) bedeckt ist.

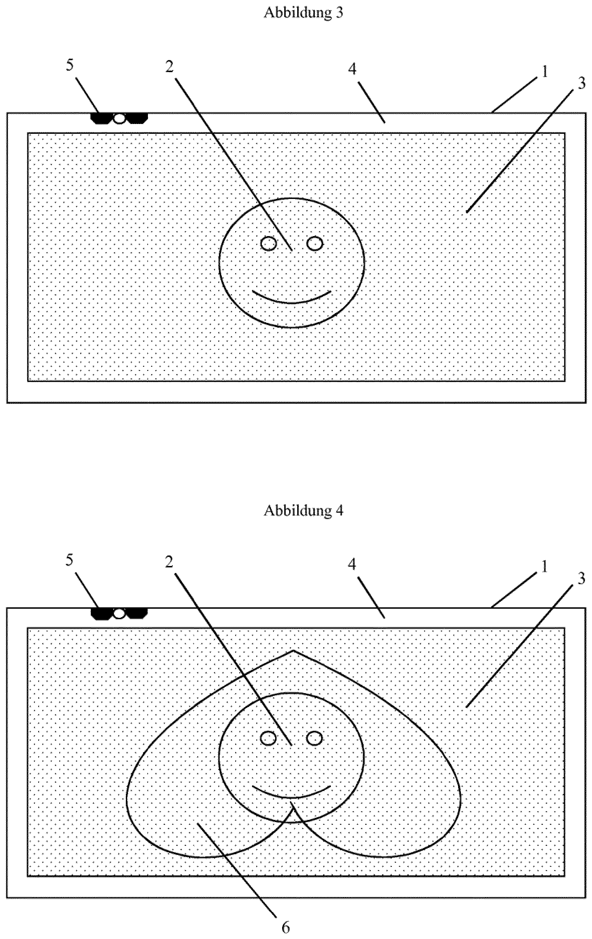

Abbildung 3 illustriert schematisch eine bevorzugte Variante der erfindungsgemäßen Trennfolie aus Trägerschicht (1), Druckbild (2) und Releasebeschichtung (3), welche neben dem Druckbild (2) im Randbereich (4) eine Tast-, Steuerungs- und/oder Druckmarke (5) aufweist.

Abbildung 4 illustriert schematisch eine bevorzugte Variante der erfindungsgemäßen Trennfolie aus Trägerschicht (1), Druckbild (2), Releasebeschichtung (3), Randbereich (4), Tast-, Steuerungs- und/oder Druckmarke (5) auf der Rückseite ein weiteres Druckbild (6) aufweist.

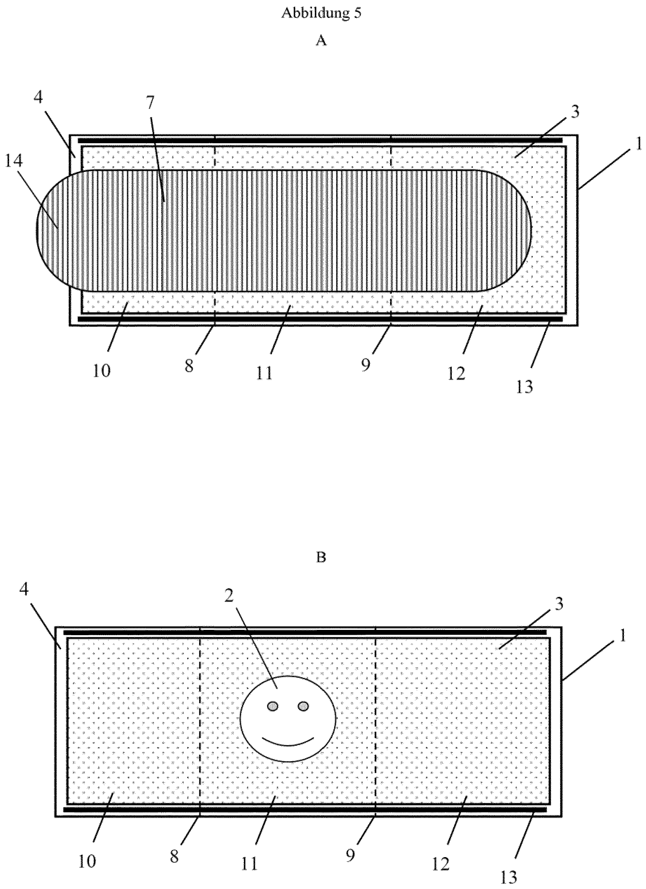

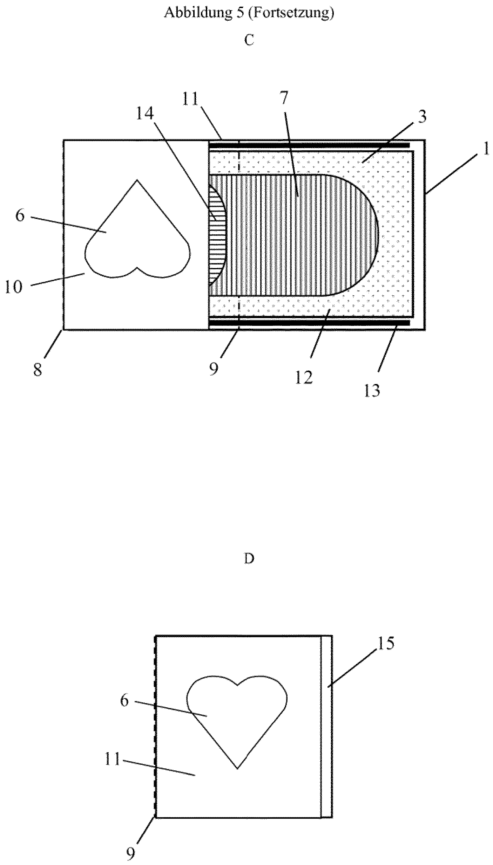

Abbildung 5 illustriert schematisch eine erfindungsgemäß bevorzugte Verpackung für einen Hygieneartikel, welche die erfindungsgemäße Trennfolie umfasst. Die Verpackung ist dabei beispielhaft als Einschlagverpackung einer Damenbinde ausgebildet, kann jedoch auch zur Verpackung anderer Verpackungsgüter, insbesondere Hygieneartikel eingesetzt werden. Bevorzugt besteht die gesamte Verpackung aus der Trennfolie und der Damenbinde. Die Trennfolie der erfindungsgemäßen Verpackung kann Tast-, Steuerungs- und/oder Druckmarken umfassen, welche in Abbildung 5 jedoch aus Gründen der Übersichtlichkeit weggelassen wurden. Abbildungen 5A bis 5D zeigen unterschiedliche Zustände der erfindungsgemäßen Verpackung.

Abbildung 5A zeigt die erfindungsgemäße Verpackung im vollständig entfalteten Zustand. Die Trägerschicht (1) weist ein Druckbild auf, welches im gezeigten Zustand durch die davorliegende Damenbinde (7) verdeckt ist. Ein Fachmann erkennt, dass das Druckbild alternativ auch versetzt zur Damenbinde (7) angeordnet bzw. so großflächig ausgestaltet sein kann, dass zumindest Teile davon nicht durch die Damenbinde (7) verdeckt werden, d.h. sichtbar sind. Die Releasebeschichtung (3) ist teilflächig auf die Trägerschicht (1) mitsamt dem Druckbild aufgebracht, so dass die Fläche der Releasebeschichtung (3) kleiner ist als die Fläche der Trägerschicht (1), es verbleibt ein Randbereich (4), welcher nicht mit der Releasebeschichtung (3) bedeckt ist. Die Damenbinde (7) weist vorzugsweise auf ihrer Rückseite einen Haftklebstoff auf (nicht dargestellt), über welchen sie auf der Releasebeschichtung (3) fixiert ist. Durch manuelles Abziehen kann die Damenbinde mitsamt dem Haftklebstoff von der Releasebeschichtung (3) abgelöst werden. Der Haftklebstoff kann anschließend bei bestimmungsgemäßer Anwendung der Damenbinde (7) zur Fixierung an der Innenseite der Unterwäsche dienen. An den beiden Längsseiten weist die Trägerschicht (1) im Randbereich (4) jeweils einen Streifen aus Haftklebstoff (13) auf, über welchen die Verpackung durch Einschlagen seitlich verschlossen werden kann. Vorzugsweise ist die Verpackung wiederverschließbar. Ein Fachmann erkennt, dass zum seitlichen Verschließen alternativ auch andere Möglichkeiten eingesetzt werden können, wie z.B. Heißsiegeln, Krimpen, etc. Die Damenbinde (7) ist bevorzugt nicht zentriert zur Trägerschicht angeordnet, sondern seitlich versetzt, so dass ein Bereich (14) der Damenbinde am Rand der Trägerschicht (1) übersteht. Gedanklich lässt sich die Trennfolie über eine erste Einschlagfalz (8) in einen schmalen Einschlagabschnitt (10) sowie einen mittleren Einschlagabschnitt (11) unterteilen. Ferner lässt sich die Trennfolie über eine zweite Einschlagfalz (9) in den mittleren Einschlagabschnitt (11) sowie einen breiten Einschlagabschnitt (12) unterteilen.

Abbildung 5B zeigt die erfindungsgemäße Verpackung im vollständig entfalteten Zustand nach der Entnahme der Damenbinde. Das dahinterliegende Druckbild (2) wird auf diese Weise sichtbar und kann ästhetischen Zwecken dienen und/oder beispielsweise in Form von Piktogrammen und/oder Text eine Anleitung zur Entsorgung der Damenbinde nach deren bestimmungsgemäßer Verwendung umfassen.

Abbildung 5C zeigt die erfindungsgemäße Verpackung im teilweise entfalteten Zustand. Dieser Zustand kann sowohl beim erstmaligen Öffnen der Verpackung als auch bei deren Wiederverschluss durchlaufen werden. Der schmale Einschlagabschnitt (10) ist dabei entlang der ersten Einschlagfalz (8) eingeschlagen (eingeklappt), wodurch das in Figuren 5A/B rückseitig angeordnete und dort daher in der gezeigten Draufsicht noch nicht sichtbare weitere Druckbild (6) gemäß Abbildung 5C auf der Vorderseite der Verpackung angeordnet ist und daher in der gezeigten Draufsicht sichtbar wird. Das weitere Druckbild kann ästhetischen Zwecken dienen und/oder beispielsweise in Form von Piktogrammen und/oder Text eine Anleitung zur bestimmungsgemäßen Entnahme der Damenbinde aus der Verpackung umfassen. Über den im Randbereich (4) aufgetragenen Haftklebstoff (13) bilden der rückseitige mittlere Einschlagabschnitt (11) sowie der vorderseitige schmale Einschlagabschnitt (10) eine Art verschlossenen Beutel, in dessen Öffnung die eingeschlagene Damenbinde (7) hereinreicht. Der überstehende Bereich (14) der Damenbinde (7) wird dabei nicht vom schmalen Einschlagabschnitt (10) verdeckt, bleibt also sichtbar (rückseitig im Vergleich zur Darstellung gemäß Abbildung 5A).

Abbildung 5D zeigt die erfindungsgemäße Verpackung im vollständig verschlossenen Zustand. Dieser Zustand kann ebenfalls sowohl beim erstmaligen Öffnen der Verpackung als auch bei deren Wiederverschluss durchlaufen werden. Der mittlere Einschlagabschnitt (11) sowie der darübergeklappte schmale Einschlagabschnitt (10) sind dabei entlang der zweiten Einschlagfalz (9) erneut eingeschlagen (eingeklappt), wodurch ein anderer Abschnitt des in Figuren 5A/B rückseitig angeordnete und dort daher in der gezeigten Draufsicht noch nicht sichtbare weitere Druckbild (6) gemäß Abbildung 5D auf der Vorderseite der Verpackung angeordnet ist und daher in der gezeigten Draufsicht sichtbar wird. Das weitere Druckbild kann ebenfalls ästhetischen Zwecken dienen und/oder beispielsweise in Form von Piktogrammen und/oder Text eine Anleitung zur bestimmungsgemäßen Entnahme der Damenbinde aus der Verpackung umfassen. Das in Figur 5C gezeigte weitere Druckbild (6) wird auf diese Weise verdeckt. Über den im Randbereich (4) aufgetragenen Haftklebstoff (13) bilden der rückseitige breite Einschlagabschnitt (12) sowie der vorderseitige mittlere Einschlagabschnitt (11) sowie der mittig angeordnete schmale Einschlagabschnitt (10) eine Art verschlossenen Beutel, in dessen Innenraum sich die zweifach eingeschlagene Damenbinde (7) befindet. Bevorzugt wird ein überstehender Bereich (15) der Trennfolie dabei nicht vom breiten Einschlagabschnitt (12) verdeckt, bleibt also sichtbar und kann z.B. als Lasche zum vereinfachten Öffnen der Verpackung mit den Händen dienen. Ein Fachmann erkennt, dass es vorteilhaft sein kann, wenn auch die Rückseite der Trägerschicht (1) bzw. im Falle einer Mehrschichtfolie die rückseitige Außenschicht der in Figuren 5A/B gezeigten Trennfolie zumindest im Randbereich eine weitere Releasebeschichtung aufweist, damit der Haftklebstoff (13) daran haftet und auch wieder davon ablösbar ist.

### Bezugszeichenliste:

1 - Trägerschicht
2 - Druckbild
3 - Releasebeschichtung
4 - Randbereich
5 - Tast-, Steuerungs- und/oder Druckmarke
6 - weiteres Druckbild
7 - Damenbinde
8 - erste Einschlagfalz
9 - zweite Einschlagfalz
10 - schmaler Einschlagabschnitt
11 - mittlerer Einschlagabschnitt
12 - breiter Einschlagabschnitt
13 - Haftklebstoff
14 - überstehender Bereich der Damenbinde
15 - überstehender Bereich der Trennfolie

Die nachfolgenden Beispiele dienen zur Illustration der Erfindung, sind jedoch nicht einschränkend auszulegen.

Als Trägerschicht wurde eine Polyolefinfolie in 24 µm Dicke - einseitig mit Corona vorbehandelt (42 mN/m) eingesetzt. Die Maschinengeschwindigkeit betrug jeweils 250 m/min.

Es wurde ein herkömmliches Flexodruckverfahren eingesetzt, wobei das Druckwerk auf einem zentralen Gegendruckzylinder angeordnet war. Das Druckwerk bestand aus einem Druckzylinder, welcher das Drucksleeve mit dem Druckdesign trug. Auf den Druckzylinder mit dem Druckdesign wurde durch eine Rasterwalze die Farbe aufgetragen, wobei überschüssige Farbe durch ein Rakelmesser von der Rasterwalzenoberfläche abgestreift wurde (sogenanntes "geschlossenes Kammerrackeldruckwerk").

Die Silikonisierung erfolgte in einem dem Farbdruckwerk nachgeschalteten Druckwerk (bestehend aus Druckzylinder, Rasterwalze und Kammerrakel), womit eine Silikonbeschichtung aufgedruckt wurde (="Silikondruckwerk"). Bei den Versuchen waren sowohl das Farbdruckwerk als auch Silikondruckwerk auf einem zentralen Gegendruckzylinder befestigt.

| Bsp. | Druckbild | | | Releasebeschichtung | | |
|---|---|---|---|---|---|---|
| | chemische Basis Bindemittel | Lösemittel | Härtungsmechanismus | chemische Basis Silikonisierung | Lösemittel | Härtungsmechanismus |
| V-1 | Nitrocell. | EtOAc | thermisch | Acrylat | - | UV radik. |
| V-2 | Acrylat | - | UV radik. | Acrylat | - | UV radik. |
| V-3 | Epoxy | - | UV kation. | Acrylat | - | UV radik. |
| V-4 | Acrylat | - | UV radik. | Epoxy | - | UV kation. |
| V-5 | Epoxy | - | UV kation. | Epoxy | - | UV kation. |
| V-6 | Nitrocell. | EtOAc | thermisch | Acrylat | EtOAc | UV radik. |
| V-7 | Nitrocell. | EtOAc | thermisch | Acrylat | - | UV radik. |
| V-8 | Nitrocell. | EtOAc | thermisch | Epoxy | - | UV kation. |
| B-1 | Acrylat | - | UV radik. | Acrylat | - | UV radik. |
| B-2 | Acrylat | - | UV radik. | Acrylat | EtOAc | UV radik. |
| B-3 | Epoxy | - | UV kation. | Acrylat | - | UV radik. |
| B-4 | Epoxy | - | UV kation. | Epoxy | - | UV kation. |
| B-5 | Epoxy | - | UV kation. | Epoxy | EtOAc | UV kation. |
| EtOAc: Ethylacetat | | | | | | |
| Nitrocell.: Nitrocellulose | | | | | | |
| UV radik.: durch UV Strahlung induzierte, radikalische Aushärtungsreaktion | | | | | | |
| UV kation.: durch UV Strahlung induzierte, kationische Aushärtungsreaktion | | | | | | |

Der jeweilige Aufbau der getesteten Trennfolien ist in nachfolgender Tabelle zusammengefasst, wobei Beispiele V-1 bis V-8 und B-3 bis B-5 Vergleichsbeispiele und Beispiele B-1 sowie B-2 erfindungsgemäß sind.

Die jeweilige Anzahl der Arbeitsgänge sowie die jeweils benötigten Zeiten für die Herstellung sind in nachfolgender Tabelle zusammengefasst:

| Bsp. | Anzahl Arbeitsgänge | Maschinenzeit für 10.000 Ifm. | Rüstzeit für 10.000 Ifm. | Zeit zwischen Bedrucken und Beschichten |
|---|---|---|---|---|
| V-1 | 2 | 80 min | 100 min | 2 Std. |
| V-2 | 2 | 80 min | 100 min | 2 Std. |
| V-3 | 2 | 80 min | 100 min | 2 Std. |
| V-4 | 2 | 80 min | 100 min | 2 Std. |
| V-5 | 2 | 80 min | 100 min | 2 Std. |
| V-6 | 1 | 40 min | 60 min | < 10 Sek. |
| V-7 | 1 | 40 min | 60 min | < 10 Sek. |
| V-8 | 1 | 40 min | 60 min | < 10 Sek. |
| B-1 | 1 | 40 min | 60 min | < 10 Sek. |
| B-2 | 1 | 40 min | 60 min | < 10 Sek. |
| B-3 | 1 | 40 min | 60 min | < 10 Sek. |
| B-4 | 1 | 40 min | 60 min | < 10 Sek. |
| B-5 | 1 | 40 min | 60 min | < 10 Sek. |
| Maschinenzeit: Reine Maschinenzeit [min] = Laufmeter (Rolle) [m] / Maschinengeschwindigkeit [m/min] | | | | |
| Rüstzeit: Reine Rüstzeit umfasst u.a. das Ein- und Aushängen der Folienrolle, das Einrichten der Farben, den Einstellaufwand, Reinigungsaufwand, etc. | | | | |

Die Trennkraft wurde bei 70 °C mit Hilfe eines elektronischen Zerreißgeräts (Auflösung 0,02 N) bestimmt. Dazu wurde Tesaband A 7475, 25 mm breit eingesetzt. Die frisch silikonisierten Muster wurden in Schwarten mit ca. 6 Lagen, ca. 24-29 cm lang und in schwarzer Folie eingeschlagen bereitgestellt. Diese Muster werden nun getempert. Die Temperung erfolgte im Trockenschrank 2h/70°C, indem die Schwarten um die Horden herum gewickelt werden. Dadurch konnte die Luft frei durch die Horden hinweg zirkulieren und damit die Schwarten gleichmäßig erwärmen. Die Proben wurden entnommen und das Klebeband über die zu prüfenden Stellen blasenfrei aufgeklebt. Das Klebeband wurde 4x mit Hilfe einer Finatrolle mit einer Geschwindigkeit von 20cm/s abgerollt. Die Trennfolie wurde so zugeschnitten, dass seitlich vom Klebeband jeweils ein freier Rand von 1 cm verblieb. Die Proben wurden in gleich lange Streifen geschnitten (ca. 30 cm lang) und gekennzeichnet. Anschließend wurden die Proben zwischen dünne Blechplatten gelegt und mit Gewichten beschwert. Die Belastung erfolgte gleichmäßig. Die Anzahl der Gewichte war von der Probenanzahl pro Etage abhängig:

| Probenanzahl / Etage | Anzahl an Gewichten / à 2,6 kg |
|---|---|
| 12 | 24 |
| 11 | 22 |
| 10 | 20 |
| 9 | 18 |
| 8 | 16 |
| 7 | 14 |
| 6 | 12 |
| 5 | 10 |
| 4 | 8 |
| 3 | 6 |

Dies entsprach einer Belastung von 70 g/cm². Die Proben wurden anschließend für 20 h bei 70 °C im Trockenschrank gelagert und nach der Entnahme auf ein Metallstützblech aufgeklebt. Ein steifer Folienstreifen wurde am Testklebeband befestigt und das Metallstützblech wurde in der unteren Spannklemme, der steife Folienstreifen in der oberen Spannklemme des Zwick/Test Gerätes befestigt. Nach Justierung der Kraftmessdose wurde das Testklebeband unter einem Winkel von 175° und einer Geschwindigkeit von 300 mm/min abgezogen.

Zur Bestimmung des "Rub Off" wurde die silikonisierte Folie plan auf eine glatte Unterlage gelegt. Dann wurde mit dem Daumen 4 - 5 mal über Silikonschicht "gerubbelt". Im Falle eines partiellen Ablösens des Silikonfilmes wurde ein "Rub off vermerkt. Ansonsten wurde Prüfung i.O. vermerkt.

Trennwerte, Härtungsgrade, Verankerung und "Rub off" sind in nachfolgender Tabelle zusammengefasst:

| Bsp. | Trennwerte 70°C im Bereich von 2 bis 25 cN/10 cm | Härtungsgrad | | Verankerung | Rub off Silikonschicht |
|---|---|---|---|---|---|
| | | Druckbild | Releasebeschichtung | | |
| V-1 | + | 0 | + | + | i.O. |
| V-2 | + | + | + | + | i.O. |
| V-3 | + | + | + | + | i.O. |
| V-4 | + | + | + | + | i.O. |
| V-5 | + | + | + | + | i.O. |
| V-6 | + | - | + | - | Rub off |
| V-7 | + | - | + | - | Rub off |
| V-8 | + | - | + | - | Rub off |
| B-1 | + | + | + | + | i.O. |
| B-2 | + | + | + | + | i.O. |
| B-3 | + | + | + | + | i.O. |
| B-4 | + | + | + | + | i.O. |
| B-5 | + | + | + | + | i.O. |
| i.O.: in Ordnung | | | | | |

Wie die vorstehenden experimentellen Daten belegen, ist die Herstellung der Trennfolien gemäß den Vergleichsbeispielen V-1 bis V-4 mit einem hohen Arbeitsaufwand und daraus resultierend mit einer langen Arbeitszeit verbunden. Die Trennfolien gemäß den Vergleichsbeispielen V-6 bis V-8 zeigen diese Nachteile zwar nicht, dafür jedoch einen Farbübertrag ins Silikondruckwerk (Kontaminierung) sowie einen Rub Off.

Im Unterschied dazu zeigen die Trennfolien gemäß den erfindungsgemäßen Beispielen B-1 und B-2 keinerlei Nachteile. Bei den Trennfolien gemäß den Vergleichsbeispielen B-3 bis B-5 ist allerdings zu berücksichtigen, dass infolge des Einsatzes kationisch aushärtender Farben bzw. Beschichtungszusammensetzungen eine Geruchsbelästigung entstehen kann.

## Patentansprüche

1. Eine Trennfolie umfassend eine Trägerschicht, ein Druckbild und eine Releasebeschichtung, wobei
(a) das Druckbild wenigstens teilweise zwischen der Trägerschicht und der Releasebeschichtung angeordnet ist; und
(b) das Druckbild mindestens eine durch UV-Strahlung radikalisch ausgehärtete Farbe umfasst; und
(c) die Releasebeschichtung ein durch UV-Strahlung radikalisch ausgehärtetes Polysiloxan umfasst und ein Flächengewicht von ≤ 5 g/m² aufweist.

2. Die Trennfolie nach Anspruch 1. wobei das Druckbild vollständig zwischen der Trägerschicht und der Releasebeschichtung angeordnet ist.

3. Die Trennfolie nach einem der vorstehenden Ansprüche, wobei die Trägerschicht ein Polyolefin umfasst.

4. Die Trennfolie nach einem der Ansprüche 1 bis 3, wobei die Trägerschicht eine Schichtdicke im Bereich von 5 µm bis 50 µm aufweist.

5. Die Trennfolie nach einem der Ansprüche 1 bis 4, wobei die Releasebeschichtung auf wenigstens einem ausgehärteten Polysiloxan basiert, welches ausgewählt ist aus der Gruppe bestehend aus Polydialkylsiloxanen, vorzugsweise Polydimethylsiloxanen, und Polyalkylarylsiloxanen, vorzugsweise Polymethylphenylsiloxanen.

6. Die Trennfolie nach einem der vorstehenden Ansprüche, wobei die Releasebeschichtung ein Flächengewicht von ≤ 2 g/m² und ganz besonders bevorzugt im Bereich von 0,1 g/m² bis 1,5 g/m² aufweist.

7. Die Trennfolie nach einem der vorstehenden Ansprüche, wobei die durch UV-Strahlung ausgehärtete Farbe einen fluoreszierenden Farbstoff oder einen lumineszenzfähigen Farbstoff umfasst.

8. Die Trennfolie nach einem der vorstehenden Ansprüche, welche auf der dem Druckbild abgewandten Rückseite der Trägerschicht mindestens eine weitere Schicht umfasst.

9. Die Trennfolie nach einem der vorstehenden Ansprüche, wobei die Releasebeschichtung, die Trägerschicht sowie die ggf. vorhandene weitere Schicht bzw. weiteren Schichten der Trennfolie jeweils unabhängig voneinander mit Zusatzstoffen ausgerüstet sein können
- welche ausgewählt sind aus der Gruppe bestehend aus Antiblockmitteln, Antistatika, Antifogmitteln, antimikrobiellen Wirkstoffen, Farbstoffen, Farbpigmenten, Stabilisierungsmitteln, vorzugsweise Hitze-Stabilisatoren, Prozess-Stabilisatoren, Prozesshilfsmittel, Flammschutzmittel, Nukleierungsmittel, Kristallisationsmittel, vorzugsweise Kristallkeimbildnern, Gleitmitteln, optischen Aufhellern, Flexibilisierungsmitteln, Siegelmitteln, Weichmachern, Abstandshaltern, Füllstoffen, Peel-Additiven, Wachsen, Benetzungsmitteln, oberflächenaktive Verbindungen, vorzugsweise Tensiden, und Dispergiermitteln; und/oder
- wobei der Gewichtsanteil der weiteren Zusatzstoffe jeweils unabhängig voneinander wenigstens 0,01 bis 30 Gew.-%, bevorzugt 0,1 bis 20 Gew.-% beträgt, jeweils bezogen auf das Gesamtgewicht der einzelnen Schicht.

10. Die Trennfolie nach einem der vorstehenden Ansprüche, wobei die Silikonschicht im Rahmen der FINAT Klebkraft Prüfung gemäß der Prüfnorm FTM 10 beim Abzug des Testklebebandes bei einer Temperatur von 70 °C, unter einem Ablösewinkel von 175 ° und einer Ablösegeschwindigkeit von 300 mm/min, entsprechend Trennwerten im Bereich von 2 bis 25 cN/10 cm, keine als "Rub off" bezeichnete Ablösungserscheinungen zeigt.

11. Eine Verpackung für einen Hygieneartikel umfassend eine Trennfolie nach einem der vorstehenden Ansprüche.

12. Eine Verwendung einer Trennfolie nach einem der Ansprüche 1 bis 10 als Verpackungsmaterial für einen Hygieneartikel.

## Claims

1. Release film comprising a carrier layer, a printed image and a release coating, wherein
(a) the printed image is disposed at least partly between the carrier layer and the release coating; and
(b) the printed image comprises at least one ink radically cured by UV radiation; and
(c) the release coating comprises a polysiloxane radically cured by UV radiation and has a surface weight of ≤ 5 g/m².

2. Release film according to Claim 1, wherein the printed image is disposed completely between the carrier layer and the release coating.

3. Release film according to either of the preceding claims, wherein the carrier layer comprises a polyolefin.

4. Release film according to any of Claims 1 to 3, wherein the carrier layer has a layer thickness in the range from 5 µm to 50 µm.

5. Release film according to any of Claims 1 to 4, wherein the release coating is based on at least one cured polysiloxane which is selected from the group consisting of polydialkylsiloxanes, preferably polydimethylsiloxanes, and polyalkylarylsiloxanes, preferably polymethylphenylsiloxanes.

6. Release film according to any of the preceding claims, wherein the release coating has a surface weight of ≤ 2 g/m² and very preferably in the range of 0.1 g/m² to 1.5 g/m².

7. Release film according to any of the preceding claims, wherein the ink cured by UV radiation comprises a fluorescent dye or a luminescent dye.

8. Release film according to any of the preceding claims, which, on the reverse side of the carrier layer, facing away from the printed image, comprises at least one further layer.

9. Release film according to any of the preceding claims, wherein the release coating, the carrier layer, and also the optionally present further layer or further layers of the release film, each independently of one another, may have been furnished with adjuvants
- which are selected from the group consisting of antiblocking agents, antistats, antifog agents, active antimicrobial ingredients, dyes, color pigments, stabilizing agents, preferably heat stabilizers, process stabilizers, process assistants, flame retardants, nucleating agents, crystallization agents, preferably crystal seed formers, lubricants, optical brighteners, flexibilizers, sealing agents, plasticizers, spacers, fillers, peel additives, waxes, wetting agents, surface-active compounds, preferably surfactants, and dispersants; and/or
- wherein the weight fraction of the further adjuvants in each case independently of one another is at least 0.01 to 30 wt%, preferably 0.1 to 20 wt%, based in each case on the total weight of the individual layer.

10. Release film according to any of the preceding claims, wherein the silicone layer in the context of the FINAT bond strength testing in accordance with the test standard FTM 10, on removal of the test adhesive tape at a temperature of 70°C, a detachment angle of 175°, and a detachment rate of 300 mm/min, corresponding to release values in the range of 2 to 25 cN/10 cm, exhibits no detachment phenomena identified as "rub off".

11. Packaging for a hygiene article, comprising a release film according to any of the preceding claims.

12. Use of a release film according to any of Claims 1 to 10 as packaging material for a hygiene article.

## Revendications

1. Film de séparation comprenant une couche de support, une image imprimée et un revêtement de démoulage, dans lequel
(a) l'image imprimée est au moins partiellement disposée entre la couche de support et le revêtement antiadhésif ; et
(b) l'image imprimée comprend au moins une encre durcie radicalement par rayonnement UV ; et
(c) le revêtement antiadhésif présente un polysiloxane durci radicalement par rayonnement UV et présente un grammage ≤ 5 g/m².

2. Film de séparation selon la revendication 1, dans lequel l'image imprimée est disposée entièrement entre la couche de support et le revêtement de démoulage.

3. Film de séparation selon l'une quelconque des revendications précédentes, dans lequel la couche de support comprend une polyoléfine.

4. Film de séparation selon l'une des revendications 1 à 3, dans lequel la couche de support présente une épaisseur de couche comprise entre 5 µm et 50 µm.

5. Film de séparation selon l'une des revendications 1 à 4, dans lequel le revêtement de démoulage est à base d'au moins un polysiloxane durci choisi dans le groupe constitué des polydialkylsiloxanes, de préférence les polydiméthylsiloxanes, et des polyalkylarylsiloxanes, de préférence les polyméthylphénylsiloxanes.

6. Film de séparation selon l'une quelconque des revendications précédentes, dans lequel le revêtement de démoulage présente un grammage ≤ 2 g/m² et de préférence compris dans la plage de 0,1 g/m² à 1,5 g/m².

7. Film de séparation selon l'une quelconque des revendications précédentes, dans lequel l'encre durcie aux UV comprend un colorant fluorescent ou un colorant luminescent.

8. Film de séparation selon l'une des revendications précédentes, qui comprend au moins une couche supplémentaire au dos de la couche de support opposée à l'image imprimée.

9. Film de séparation selon l'une quelconque des revendications précédentes, dans lequel le revêtement antiadhésif, la couche de support et la ou les couches supplémentaires du film de séparation peuvent être pourvus d'additifs, indépendamment les uns des autres
- qui sont choisis dans le groupe constitué des agents antiblocage, des agents antistatiques, des agents antibuée, des agents antimicrobiens, des colorants, des pigments de couleur, des stabilisants, de préférence les stabilisants thermiques, des stabilisants de procédé, des auxiliaires de procédé, des retardateurs de flamme, des agents de nucléation, des agents de cristallisation, de préférence les agents de nucléation de cristaux, des lubrifiants, des azurants optiques, des agents de flexibilité, des agents d'étanchéité, des plastifiants, des espaceurs, des charges, des additifs de pelage, des cires, des agents mouillants, des composés tensioactifs, de préférence les tensioactifs, et des dispersants ; et/ou
- dans lequel la proportion en poids des autres additifs est chacun indépendamment l'un de l'autre d'au moins 0,01 à 30 % en poids, de préférence de 0,1 à 20 % en poids, dans chaque cas sur la base du poids total de la couche individuelle.

10. Film de séparation selon l'une des revendications précédentes, dans lequel la couche de silicone ne présente aucun phénomène de décollement appelé « rub off » dans le test de résistance d'adhérence FINAT selon la norme d'essai FTM 10 lorsque le ruban adhésif d'essai est retiré à une température de 70 °C, à un angle de décollement de 175 ° et à une vitesse de décollement de 300 mm/min, correspondant à des valeurs de décollement dans la plage de 2 à 25 cN/10 cm.

11. Emballage pour article d'hygiène comprenant un film de séparation selon l'une des revendications précédentes.

12. Utilisation d'un film de séparation selon l'une des revendications 1 à 10 comme matériau d'emballage pour un article d'hygiène.
